# EUROPÄISCHE PATENTSCHRIFT

(11) **EP 0 710 175 B1**
(45) Veröffentlichungstag und Bekanntmachung des Hinweises auf die Patenterteilung: **12.03.1997**
(21) Anmeldenummer: 94922855.5
(22) Anmeldetag: 21.06.1994
(51) Int. Cl.: B30B 11/28, B01J 2/22

(54) **AUS PFLANZLICHEM MATERIAL DURCH PELLETIEREN HERGESTELLTER PRESSKÖRPER UND VORRICHTUNG ZU SEINER HERSTELLUNG**
PRESSING PRODUCED FROM VEGETABLE MATERIAL BY PELLETTING AND DEVICE FOR MAKING IT
PIECE PRESSEE REALISEE DANS UN MATERIAU VEGETAL PAR BOULETTAGE ET DISPOSITIF PERMETTANT DE LA PRODUIRE

(30) Priorität: 20.07.1993 DE 9310760 U; 08.02.1994 DE 9402091 U
(43) Veröffentlichungstag der Anmeldung: 08.05.1996
(73) Patentinhaber: Haimer, Franz, D-86568 Hollenbach (DE)
(72) Erfinder: Haimer, Franz, D-86568 Hollenbach (DE)
(74) Vertreter: Ernicke, Hans-Dieter, Dipl.-Ing.
(86) Internationale Anmeldenummer: EP9402015
(87) Internationale Veröffentlichungsnummer: WO9503165

(56) Entgegenhaltungen:
- CH-A- 426 238
- DE-B- 1 211 845
- DE-C- 599 421
- US-A- 3 613 335
- US-A- 4 824 352
- AUFBEREITUNGS-TECHNIK, Bd.11, Nr.3, März 1970 Seiten 128 - 138 W. PIETSCH 'DIE BEDEUTUNG DER WALZENKONSTRUKTION VON BRIKETTIER-, KOMPAKTIER-, UND PELLETIERMASCHINEN FÜR IHRE TECHNISCHE ANWENDUNG'

## Beschreibung

Die Erfindung bezieht sich auf einen aus pflanzlichem Material durch Pelletieren hergestellten Preßkörper sowie auf eine Vorrichtung zu dessen Herstellung.

Durch die US-PS 4 824 352 ist eine Pelletierpresse für die Verarbeitung von groben und langen Fasern, insbesondere Stroh, zu Tierfutter bekannt. Das Material wird dabei über einen Schneckenförderer einem sich erweiternden Trichter zugeführt, der im Einlaufzwickel von zwei zwangsläufig angetriebenen, zahnradartig ineinander greifenden Hohlwalzen angeordnet ist. Vom Zahngrund aus führen mehrere radial sich verengende Bohrungen in den Innenraum der Hohlwalzen. Das in den Zwickelbereich der Hohlwalzen herangeführte Halmgut wird von den in die Zahnlücken eintauchenden Zähnen abgeschert und durch die radialen Bohrungen gepreßt.

Der Querschnitt dieser Preßkörper entspricht dem Querschnitt der Bohrungen. Diese weisen entweder kreis- oder vieleckigen Querschnitt auf. Das Problem dieser vorbekannten Pelletiervorrichtung besteht darin, daß ein blockierender Stau des zu verpressenden Materials zwischen den ineinander eintauchenden Zähnen entsteht, weil zwischen den Bohrungen sich notwendigerweise Gegenpreßflächen bilden, an denen sich die Preßmasse staut.

Die Erfindung wendet demgegenüber ein anderes, in der nicht vorveröffentlichten, aber älteren WO 93/22132 offenbartes Funktionsprinzip an, wonach die geerntete und zerkleinerte Biomasse, insbesondere Getreide, Heu und dergleichen einer aus zahnradartig ineinander greifenden Rotationskörpern bestehenden Pelletierpresse zugeführt wird, deren Zähne im Gegensatz zum Stand der Technik schachtartige durchgehende Preßkanäle bilden. Demzufolge sind die Zähne als Stege ausgebildet, die sich in radialer Richtung wesentlich länger als Zähne normaler Zahnräder erstrecken. Die ineinander greifenden äußeren Bereiche der Stege führen das in den Zwickelbereich der Rotationskörper gebrachte Material in die zwischen den Stegen des anderen Rotationskörpers befindlichen Lücken mit verhältnismäßig geringer Eintauchtiefe ein, wonach das Material längs der als Schächte ausgebildeten Preßkanäle radial nach innen unter Verdichtung weiter wandert, bis es in den inneren Hohlraum des einzelnen Rotationskörpers austritt und dort abgebrochen wird.

Die auf diese Weise hergestellten Preßkörper weisen die Form eines Quaders mit verhältnismäßig geringer Wandstärke auf, welche der lichten Weite der Preßkanäle entspricht.

Es hat sich nun gezeigt, daß die Festigkeit der so hergestellten Preßkörper in beträchtlicher Weise von der Feuchtigkeit der verpreßten Masse abhängt. Je feuchter das verpreßte Material ist, desto geringer wird die Festigkeit des gebildeten Preßkörpers. Demgemäß wird mit der Erfindung angestrebt, Preßkörper herstellen zu können, die in ihrer Festigkeit nicht mehr so stark abhängig von der Feuchtigkeit des zu verpressenden Materials sind.

Ausgehend von der US-PS 48 24 352 als nächstliegendem Stand der Technik wird dieses Problem erfindungsgemäß mit den Merkmalen des Patentanspruches 1 gelöst.

Es ist zwar aus der Veröffentlichung "Aufbereitungstechnik, Bd. 11, Nr. 3, März 1970, Seiten 128 - 138" bekannt, einem Preßkörper eine wellblechartige Struktur zu geben. Dies geschieht aber nicht im Pelletierverfahren sondern mittels einer Wälzdruck-Brikettier- und Kompaktiermaschine. Diese enthält in den Mantelflächen von zwei sich aneinander abwälzenden Zylindern dem Preßkörper entsprechende Vertiefungen, in welche ein pulverförmiges Material eingefüllt und darin verdichtet wird.

Im Gegensatz hierzu wird bei der Erfindung ein pflanzliches Material im Pelletierverfahren wellblechartig verdichtet und quer zur Profilierung abgebrochen.

Es hat sich gezeigt, daß ein diese Form aufweisender Preßkörper eine von der Beschaffenheit und der Feuchtigkeit des verpreßten Materials praktisch unabhängige Festigkeit besitzt. Dieser Erfolg hat besondere Bedeutung für die Verwendung der erfindungsgemäßen Preßkörper als Heizmaterial. Zufolge der Festigkeit des Preßkörpers entsteht beim Verladen und Transport ein geringerer Abrieb und eine geringere Bruchgefahr. Demgemäß sind die Verluste der geernteten Biomasse wesentlich reduziert worden. Andererseits bietet der erfindungsgemäße Preßkörper zu Folge der wellenförmigen Profilierung eine vergrößerte Oberfläche, was im Falle der Verwendung des Preßkörpers als Brennstoff zu einer stark verbesserten Heizleistung führt.

Durch das Abbrechen des gepreßten Stranges entstehen rauhe oder faserige Stirnseiten quer zu den Profilierungen.

Die hohe Festigkeit des erfindungsgemäß hergestellten Preßkörpers rührt offenbar davon her, daß er im Querschnitt eine unterschiedliche Struktur besitzt. Im Bereiche der Wellenberge und Wellentäler ist eine hohe Dichte des verpreßten Materials festzustellen, wohingegen im mittleren Wandbereich des Preßkörpers eine leicht wellige Struktur des verpreßten Materials sichtbar wird, deren Höhenunterschied von Wellenberg zu Wellental im Verhältnis jedoch wesentlich geringer als jener der äußeren wellenförmigen Profilierung ist. Die Bereiche größerer Dichte sorgen dafür, daß der Abrieb beim Verladen und Transportieren der Preßkörper stark reduziert ist. Die leicht wellenförmige Profilierung des verpreßten Materials im mittleren Wandungsbereich des Preßkörpers verursacht offenbar eine gewisse Elastizität der verpreßten Masse, die zu großer Bruchunempfindlichkeit führt.

Mit den Ansprüchen 5 bis 9 wird die erfindungsgemäße Ausbildung einer Pelletiervorrichtung offenbart, welche die vorstehend erwähnte Form der Preßkörper herzustellen gestattet. Dem selbständigen Anspruch 5 liegt die bereits eingangs erwähnte US-PS 48 24 352 am nächsten. Danach sind miteinander nach Art von Zahnrädern kämmende Rotationskörper bekannt. Das herangeführte Halmgut wird durch die Zähne abgeschert und durch radiale Bohrungen gepreßt, die vom Zahngrund bis zum inneren Hohlraum der Rotationskörper führen.

Die Gegenstände der Ansprüche 10 und 11 sind selbständiger Natur. Sie gehen ebenfalls von der US-PS 48 24 352 aus. Durch die ältere nicht vorveröffentlichte PCT-WO 93/22132 ist an sich schon vorgeschlagen worden, die Hohlwalzen von einem Gehäuse zu umschließen. Das zu verdichtende pflanzliche Gut wird in den Einlaufzwickel der Hohlwalzen gebracht und gelangt dort unter Verdichtung in die zwischen den Stegen befindlichen Schächte und wandert Schritt für Schritt radial nach innen bis in den Innenraum der einzelnen Hohlwalzen. Die Stege der Hohlwalzen sind beheizt und in bestimmter Weise profiliert, so daß das pflanzliche Gut während des Durchlaufes durch die Schächte verdichtet und durch Trocknung ausgehärtet wird. Sobald das pflanzliche Gut den Innenraum der einzelnen Hohlwalze erreicht hat, wird es abgebrochen und in axialer Richtung aus der Hohlwalze herausbefördert.

Es hat sich nun gezeigt, daß die Qualität der pelletierten Preßlinge wesentlich davon abhängt, wie lange die Verweilzeit in den Schächten zwischen den Stegen dauert. Je länger die Verweilzeit beträgt, desto günstiger verläuft die Aushärtung des Preßlinges, was unter anderem zur Verminderung des Abriebes beim Verladen und Transportieren der Preßlinge führt. Sofern die Preßlinge als Heizkörper verwendet werden, ist die zeitlich verlängerte Aushärtung des Preßlinges in den Schächten ursächlich für die Erhöhung des Heizwertes der Preßlinge, wobei man bedenken muß, daß die Erntebedingungen für das pflanzliche Gut klimatisch unterschiedlich sind.

Mit der zusätzlichen Erfindung gemäß den Anssprüchen 10 und 11 wird ein größerer Durchsatz des pflanzlichen Gutes und eine verbesserte Aushärtung erreicht, ohne daß die Dimensionen der Pelletiervorrichtung verstärkt werden müssen. Dies rührt im wesentlichen davon her, daß die Stege stellenweise mit Vorsprüngen versehen sind, die zur gegenseitigen Abstützung benachbarter Stege in Umfangsrichtung bestimmt sind.

Diese Erfindung bietet aber auch die Möglichkeit, wellenförmig profilierte Preßlinge zu erzeugen, wie dies bereits eingangs erwähnt worden ist. Bezogen auf die radiale Länge des einzelnen Preßlinges ist das darin enthaltene Material wesentlich voluminöser als bei einem Preßling, der nach der WO 93/22132 mit glatten Wänden der Stege erzielbar ist. Zufolge der wellenförmigen Profilierung der Außenwände der Stege steht dem ankommenden pflanzlichem Gut eine vergrößerte Fläche zur Verdichtung und Aushärtung zur Verfügung.

Mit der Erfindung wird aber die zur Verdichtung der Preßlinge zur Verfügung gestellte Fläche an den Außenwänden der Stege noch weiter vergrößert, wozu die Außenwände der Stege stellenweise mit Vorsprüngen versehen sind, die zur gegenseitigen Abstützung benachbarter Stege in Umfangsrichtung bestimmt sind.

Durch diese Vorsprünge werden die Stege bei ihrer axialen Verlängerung gegen Durchbiegung stabilisiert, weil sie sich untereinander abstützen. Zugleich wird durch die Vorsprünge eine Gruppierung der zwischen den Stegen befindlichen Schächte herbeigeführt. Das ankommende, zu pelletierende pflanzliche Gut wird nämlich einlaufseitig in die einzelnen Gruppierungen verteilt. Dies hat zur Folge, daß das Pflanzliche Gut im einzelnen Schacht eine größere Verweilzeit besitzt und daher intensiver ausgehärtet werden kann.

Infolge dieser Vorteile ist es möglich, den Durchsatz des zu verpressenden pflanzlichen Gutes pro Zeiteinheit zu vergrößern, ohne daß die Aushärtung beeinträchtigt wird.

Einzelheiten der Erfindung sind in der Zeichnung schematisch und beispielsweise dargestellt. Es zeigen:
- Figur 1:: einen radialen Querschnitt durch eine Pelletiervorrichtung,
- Figur 2:: eine Draufsicht auf einen mit einer wellenförmigen Profilierung versehenen Preßkörper,
- Figur 3:: einen Querschnitt nach der Linie III-III durch den Preßkörper gemäß Figur 2,
- Figur 4:: eine radiale Draufsicht auf drei Stege eines Rotationskörpers mit zwischen ihnen gebildeten Preßkanälen,
- Figur 5:: einen Querschnitt durch die Stege längs der Linie V-V gemäß Figur 4,
- Figur 6:: eine radiale Draufsicht längs des Pfeiles A in Figur 1 und

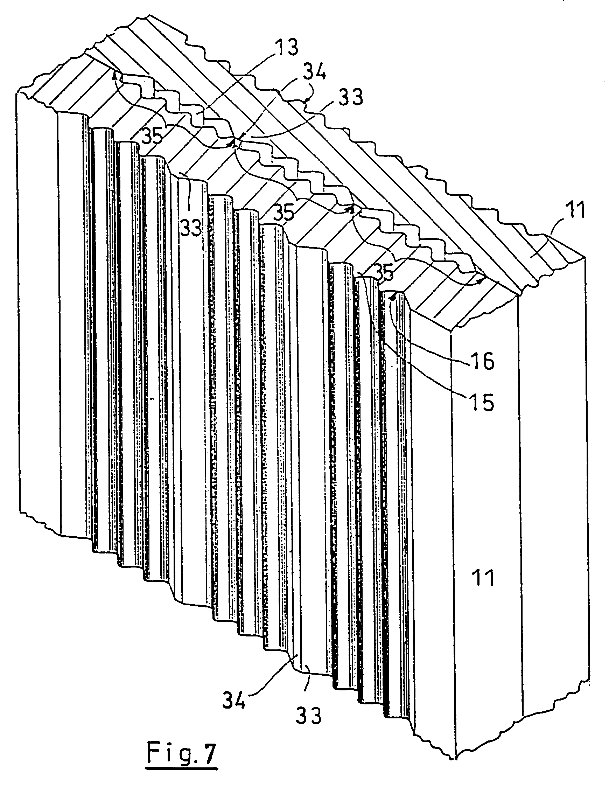

- Figur 7:: eine perspektivische Ansicht eines Abschnittes von zwei aneinanderliegenden Stegen gemäß Figur 6.

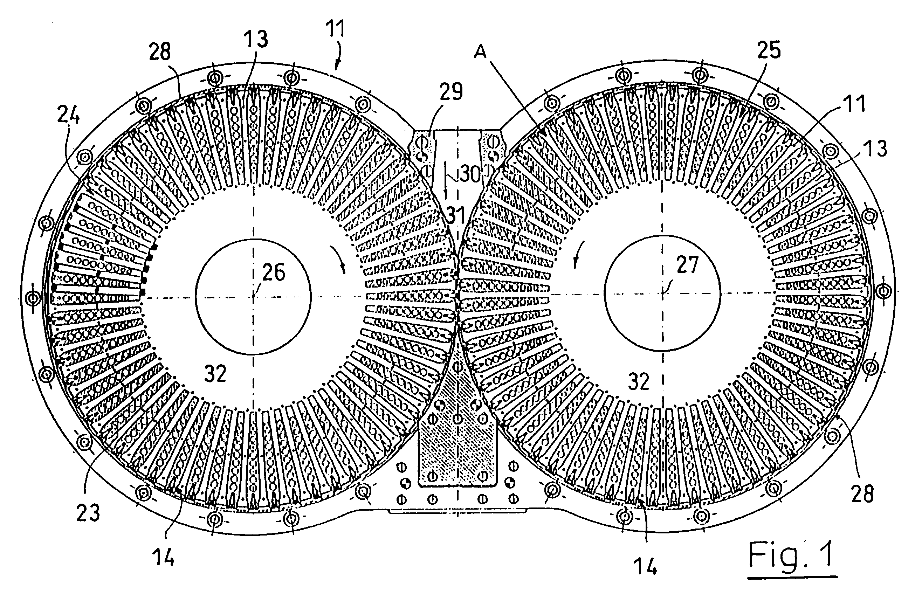

Die in Figur 1 dargestellte Pelletiervorrichtung entspricht im wesentlichen der vorbekannten Anordnung gemäß WO 93/22132. Danach sind zwei Hohlwalzen (24,25) mit zueinander parallelen Achsen (27,26) nach Art von Zahnrädern in einem Gehäuse (28) gelagert. Die einzelnen Hohlwalzen (24,25) bestehen aus radial angeordneten Stegen (11), zwischen denen sich Schächte (13) befinden. Die Stege (11) sind stirnseitig mit nicht dargestellten Flanschkörpern verbunden, über welche die Lagerung und der Antrieb der Hohlwalzen (24,25) erfolgt.

Das zu pelletierende pflanzliche Gut wird über den Anschluß (29) in Förderrichtung gemäß Pfeil 30 in den Anschlußzwickel (31) zwischen den Hohlwalzen (24,25) gebracht.

Von dort gelangt das pflanzliche Gut in die Schächte (13), welche sich zwischen den radialen Stegen (11) erstrecken. Diese Schächte (13) führen innenseitig in den Hohlraum (32) der einzelnen Hohlwalze (24,25). Die Stege (11) sind in bestimmter Weise profiliert und mit Kanälen (23) für den Durchfluß von Wärmemitteln versehen, so daß gewährleistet ist, daß das pflanzliche Gut beim radialen Durchlauf der Schächte (13) verdichtet und so erwärmt wird, daß eine Aushärtung des pflanzlichen Gutes stattfindet. Im Hohlraum (32) der einzelnen Hohlwalze (24,25) wird der verdichtete und ausgehärtete Preßling abgebrochen und in axialer Richtung abgeführt.

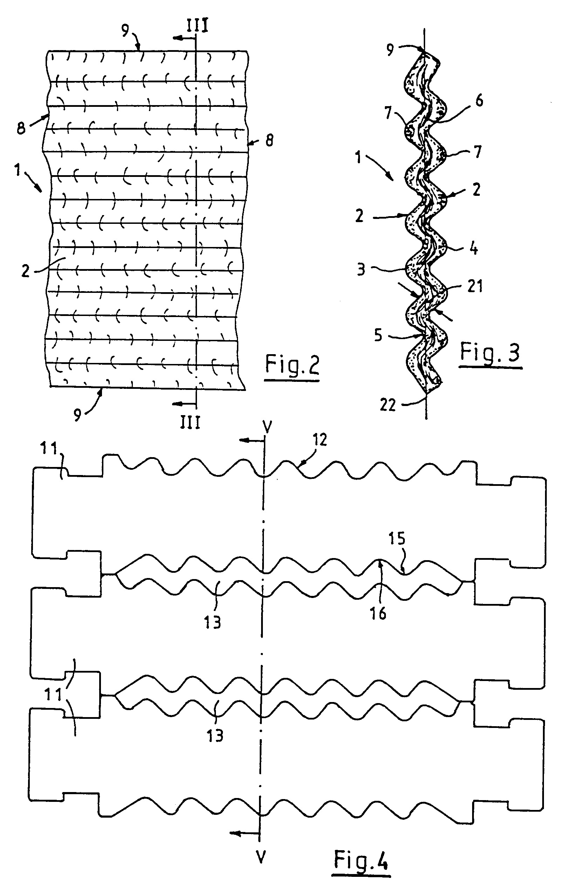

Der in den Fig. 2 und 3 in Draufsicht und Querschnitt dargestellte Preßkörper (1), der mit einer Pelletiervorrichtung nach Figur 1 herstellbar ist, weist an beiden breiten Seiten (2) eine wellenförmige Profilierung (3) auf, die beim Ausführungsbeispiel parallel zueinander sich erstreckende Wellenberge (4) und Wellentäler (5) enthält. Dieser Preßkörper (1) entsteht in seiner dargestellten Form durch Strangpressen von Biomasse durch wellenförmig profilierte Schächte (13) (Preßkanäle), wie sie in Fig. 4 in Draufsicht dargestellt sind. Demgemäß sind die breiten Seiten (2) und die Seitenrandflächen (9) glatt und hart ausgebildet, wohingegen die Stirnflächen (8) des Preßkörpers (1) eine willkürliche Linienführung besitzt, die durch Abbrechen von Abschnitten aus einem endlosen Strang entstehen. Die zur Verarbeitung kommende Biomasse ist im wesentlichen Getreide, das im reifen Zustand geerntet und noch auf dem Feld zerkleinert und verpreßt wird.

Hierzu bedient man sich zweckmäßigerweise einer Vorrichtung, wie sie in Figur 1 offenbart ist.

Charakteristisch ist die innere Struktur des Preßkörpers (1) längs einer Bruchlinie entsprechend dem Querschnitt III-III in Fig. 3. Wenn man nämlich durch den mittleren Querschnittsbereich des Preßkörpers (1) eine Symmetrieebene (22) sich vorstellt, dann schlängelt sich ein verhältnismäßig langfaseriges Material der Biomasse in einer welligen Struktur (6) um diese Symmetrieebene (22), wobei die Erhöhungen und Vertiefungen dieser welligen Struktur (6) ungefähr mit den Wellenbergen (4) und Wellentälern (5) des Preßkörpers (1) übereinstimmen, jedoch in ihrem Höhenunterschied im Verhältnis wesentlich geringer als die wellenförmige Profilierung (3) des Preßkörpers (1) sind. Zum anderen erkennt man im Bereiche der Wellenberge (4) und Wellentäler (5) Zonen (7) höherer Dichte. Daraus ergibt sich der Vorteil, daß der erfindungsgemäße Preßkörper (1) zufolge dieser Struktur hohe Festigkeit aufweist. Diese hat für die Verwendung des Preßkörpers als Brennmaterial große Bedeutung, weil beim Verladen und Lagern der Preßkörper ein nur geringfügiger und daher vernachlässigbarer Abrieb festgestellt werden kann. Die erfindungsgemäßen Preßkörper (1) sind außerdem verhältnismäßig bruchfest und können daher in einer Gestaltung hergestellt werden, die für den späteren Verbrennungsvorgang als Brennmaterial von besonderem Vorteil ist. Dabei spielt es eine Rolle, daß die Dicke des Preßkörpers (1) längs der wellenförmigen Profilierung konstant bleibt. Es wird eine gegenüber herkömmlichen Preßkörpern wesentlich vergrößerte Oberfläche geschaffen, die sich für den Verbrennungsvorgang günstig auswirkt.

Es liegt natürlich auf der Hand, die Form des Preßkörpers (1) in ihrer Querschnittsstruktur auch alternativ zu gestalten. Es müssen nicht unbedingt die Wellenberge (4) und Wellentäler (5) gleichförmigen Charakter besitzen, wie es in Figur 3 dargestellt ist. Man kann durchaus den Preßkörper auch mit einer riefenförmigen Gestaltung versehen, bei der dann keine gleichmäßige Wanddicke mehr vorhanden ist. Die Erfindung beschränkt sich daher nicht auf das Ausführungsbeispiel der Figur 2 und 3.

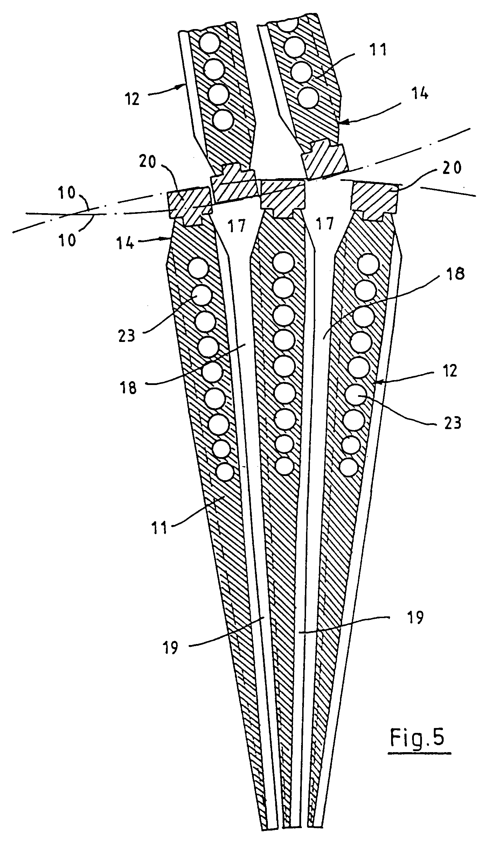

In den Figuren 4 und 5 ist nun derjenige Teil einer Preßvorrichtung gezeigt, der für die Bildung der in Fig. 2 und 3 dargestellten Preßkörper (1) ursächlich ist. Dabei geht die Erfindung von einer Vorrichtung gemäß Figur 1 aus.

Das ankommende zerkleinerte Material (Biomasse) wird in den Einlaufzwickel (31) von zwei nach Art von Zahnrädern miteinander kämmenden Hohlwalzen (24,25) gebracht, die in Fig. 1 dargestellt und in Fig. 5 symbolisch mit strichpunktierten Umlauflinien ihrer Verschleißriegel (20) angedeutet sind. Diese Verschleißriegel (20) gehören jeweils zu einem Steg (11), von denen viele wie Zähne eines Zahnrades mit gleichem Abstand voneinander radial angeordnet und mit stirnseitigen Wangen zum Rotationskörper (10) verbunden sind. Zwischen den Stegen (11) erstrecken sich in radialer Richtung durchgehende Schächte (13) (Preßkanäle), durch welche das ankommende Material der Biomasse während der Rotation der Rotationskörper (10) gepreßt wird. Wie die Figur 5 zeigt, greifen die Verschleißriegel (20) nur verhältnismäßig geringfugig in die zwischen den Verschleißriegeln (20) des anderen Rotationskörpers (10) befindlichen Zahnlücken ein, wobei angestrebt wird, daß sich die Verschleißriegel (20) nicht miteinander berühren.

Die Seitenflächen der Stege (11) weisen eine wellenförmige Profilierung (12) auf, wie sie in Fig. 4 dargestellt ist.

Auch diese wellenförmige Profilierung (12), welche der wellenförmigen Profilierung (3) des Preßkörpers (1) gemäß Fig. 3 entspricht, weist Wellenberge (15) und Wellentäler (16) auf, wobei einem Wellenberg (15) des einen Steges ein Wellental (16) des benachbarten Steges gegenüberliegt. Auf diese Weise wird ein in der Wanddicke (21) konstant bleibender welliger Preßkörper (1) gemäß Fig. 3 erzeugt.

Beim Ausführungsbeispiel der Fig. 5 wird angestrebt, daß die lichte Weite des Schachtes (13) (Preßkanal) sich in radialer Richtung verändert. So ist im Bereiche des Materialeinlaufes der einzelne Schacht (13) mit einer starken keilförmigen Verengung (17) versehen, die durch Abschrägung (14) der Stegseitenwände entsteht. Dadurch wird ein zunächst lockerer Stau des in die keilförmige Verengung (17) eingeführten Materials erzeugt. Dieser keilförmigen Verengung (17) schließt sich ein Abschnitt (18) von konstanter lichter Weite des Schachtes (13) an. In diesem Bereich des Abschnittes (18) wird die Querschnittsform des Preßkörpers gebildet. Der einzelne Schacht (13) weist alsdann einen Bereich (19) mit einer schwachen keilförmigen Erweiterung auf. Diese Maßnahme dient dazu, die auf den Preßkörper (1) einwirkende Reibung zu reduzieren und das Entweichen von Luft bzw. Gasen zu ermöglichen. Dieser Bereich (19) mit der schwachen keilförmigen Erweiterung kann ungefähr die halbe Höhe des einzelnen Steges (17) umfassen.

Weil die Stege (11) mit Abstand voneinander radial angeordnet sind, wird die unterschiedliche lichte Weite der Schächte (13) (Preßkanäle) dadurch erreicht, daß die Tiefe der einzelnen Wellentäler (16) stufenweise verändert wird. Ebenso kann die radial nach innen sich verringernde Keilform des Steges (11) stufenförmig verändert werden. Entscheidend ist, daß das zu verpressende Material (Biomasse) zunächst locker in die keilförmige Verengung (17) eingeführt wird, wo es die Möglichkeit hat, sich so zu orientieren, daß die einzelnen Fasern etwa parallel zur Rotationsachse des Rotationskörpers (1) zu liegen kommen. Wenn dieser Orientierungsvorgang abgeschlossen ist, durchlaufen die einzelnen Stränge eine die Form bildende Strecke (18) konstanter lichten Weite des Preßkanals (13). Besonders in diesem Bereich sind im einzelnen Steg (11) durchgehende Bohrungen (23) vorgesehen, durch welche ein Heizmittel geführt wird. Dieses kann beispielsweise das Abgas eines Verbrennungsmotors einer Erntemaschine sein.

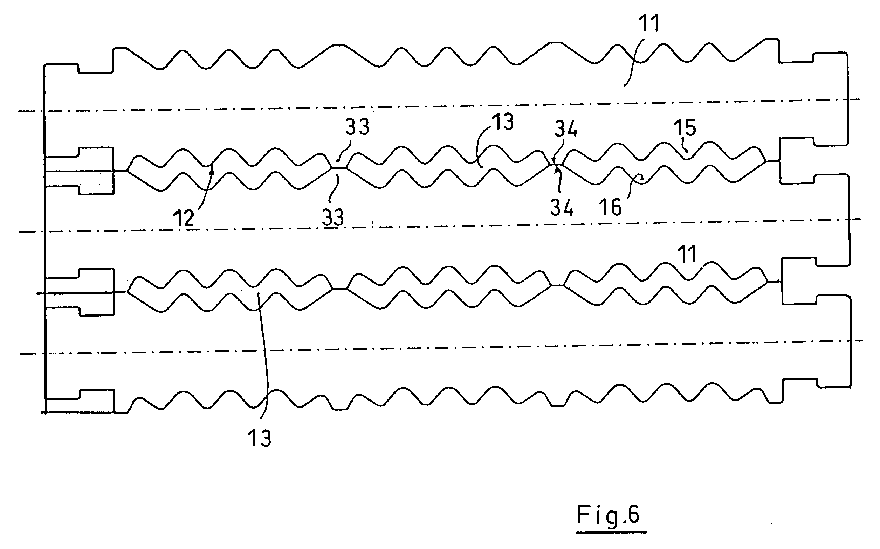

Auch im Beispiel der Fig. 6 weist der einzelne Steg (11) an seinen Außenflächen eine wellenförmige Profilierung (12) auf, wenngleich bei dem aus Fig. 6 erkennbaren Erfindungsgedanken auch eine ebene bzw. glatte Fläche der Stege (11) verwendet werden kann.

Um einen größeren Durchsatz des zu verpressenden Erntegutes je Zeiteinheit zu erreichen, sieht die Erfindung die Anordnung von Vorsprüngen (33) vor, die im Rahmen eines bevorzugten Ausführungsbeispieles als radial sich erstreckende Leisten ausgebildet sind. Die Stirnflächen (34) dieser Leisten (33) benachbarter Stege (11) sollen aneinanderliegen, so daß sich eine Abstützung dieser Stege (11) an diesen Vorsprüngen (33) (Leisten) ergibt. Die zwischen den Vorsprüngen (33) (Leisten) befindlichen Abschnitte (35) der einzelnen Stege (11) sind damit voneinander distanziert. Eine Durchbiegung der Stege (11) ist zur Folge dieser Abstützung unmöglich, weshalb bei verlängerten Stegen (11) eine gleichbleibende Dimensionierung der Stegquerschnitte erfolgen kann.

Das durch den Anschluß (29) gemäß Figur 1 herangeführte Material wird über eine in Achsrichtung gemessene längere Strecke auf die Stege (11) verteilt, was zur Folge hat, daß die stufenweise Verdichtung und damit die Verweilzeit des pflanzlichen Gutes in den Schächten (13) derart verändert werden, daß das zu pressende Material eine größere Zeit benötigt, um durch die Schächte (13) zu gelangen. Die Folge davon ist eine intensivere Aushärtung des Materials und damit eine Verbesserung der Qualität des hergestellten Preßlinges.

Es versteht sich von selbst, daß die Vorsprünge (33) (Leisten) an der außenseitigen Stirnfläche Abschrägungen (14) gemäß Figur 1 aufweisen, welche dazu dienen, das herankommende pflanzliche Gut gleichmäßig auf die Schächte (13) zu verteilen.

### STÜCKLISTE

- 1: Preßkörper
- 2: breite Seite
- 3: wellenförmige Profilierung
- 4: Wellenberg
- 5: Wellental
- 6: wellige Struktur
- 7: Zonen höherer Dichte
- 8: Stirnfläche
- 9: Seitenrandfläche
- 10: Rotationsebene
- 11: Steg
- 12: wellenförmige Profilierung
- 13: Schacht (Preßkanal)
- 14: Abschrägung
- 15: Wellenberg
- 16: Wellental
- 17: keilförmige Verengung
- 18: konstante lichte Weite
- 19: schwache keilförmige Erweiterung
- 20: Verschleißriegel
- 21: Wanddicke
- 22: Symmetrieebene
- 23: Bohrung
- 24: Hohlwalze
- 25: Hohlwalze
- 26: Achse
- 27: Achse
- 28: Gehäuse
- 29: Anschluß
- 30: Förderrichtung
- 31: Abschlußzwickel
- 32: Hohlraum
- 33: Vorsprung (Leiste)
- 34: Stirnfläche
- 35: Abschnitt

## Patentansprüche

1. Preßkörper aus verdichtetem pflanzlichem Material hergestellt durch Pelletieren, wobei die breiten Umfangsflächen (2) glatt sind, dadurch **gekennzeichnet,** daß der Preßkörper (1) eine wellblechartige Profilierung (3) seiner breiten Umfangsflächen (2) aufweist und die das Profil aufweisenden seitlichen Stirnflächen (8) rauh bzw. faserig mit aus den Stirnflächen (8) austretenden Fasern ausgebildet sind.

2. Preßkörper nach Anspruch 1, dadurch **gekennzeichnet,** daß das gepreßte pflanzliche Material im mittleren Wandbereich des Preßkörpers (1) eine im Querschnitt gesehen leicht wellige Struktur (6) aufweist, deren Höhenunterschied von Wellental zum Wellenberg im Verhältnis wesentlich geringer als jener der äußeren wellenförmigen Profilierung (3) ist.

3. Preßkörper nach Anspruch 1 oder 2, dadurch **gekennzeichnet,** , daß er eine unterschiedliche Dichte, über den Querschnitt gesehen, aufweist, derart, daß die Dichte im Bereich der Wellenberge (4) und Wellentäler (5) wesentlich größer als im übrigen Bereich ist.

4. Preßkörper nach einem der Ansprüche 1 bis 3, dadurch **gekennzeichnet,** daß er eine Breite von ca. 10 cm, eine Höhe von ca. 1,5 cm und eine Wanddicke von ca. 0,5 cm besitzt.

5. Pelletier-Vorrichtung zur Herstellung von Preßkörpern, mit zwei nach Art von Zahnrädern miteinander kämmenden Rotationskörpern (10) mit Preßkanälen, durch welche eine zerkleinerte Biomasse von außen nach innen beim Kämmen der Rotationskörper (10) unter Verdichtung geführt wird, dadurch gekennzeichnet, daß die Zähne der Rotationskörper (10) durch radial sich erstreckende Stege (11) mit in radialer Richtung gesehen wellenförmiger Profilierung (12) ihrer Seitenflächen gebildet sind, zwischen denen sich entsprechend wellenförmig profilierte Schächte (13) als Preßkanäle erstrecken, an deren Austritt die verdichtete Biomasse abgebrochen wird.

6. Vorrichtung nach Anspruch 5, dadurch **gekennzeichnet,** daß der einzelne Steg (11) einen sich von außen nach innen verjüngenden keilförmigen Querschnitt aufweist und in seinen gegenüberliegenden Seitenflächen die radial sich erstreckende Profilierungen (12) zur Bildung einer wellelförmigen Struktur der zwischen den Stegen befindlichen Preßkanäle (13) aufweist.

7. Vorrichtung nach Anspruch 6, dadurch **gekennzeichnet,** das die die Wellentäler (16) bildenden Profilierungen (12) an ihren radial äußeren Ende abgeschrägt (14) sind.

8. Vorrichtung unter Anspruch 6 oder 7, dadurch **gekennzeichnet,** daß die zwischen benachbarten Stegen (11) gebildeten Preßkanäle (13) in radialer Richtung von außen her zunächst eine deutliche keilförmige Verengung (17), danach eine Strecke konstanter lichter Weite (18) und daran angrenzend eine längere Strecke mit einer schwach keilförmigen Erweiterung (19) aufweisen.

9. Vorrichtung nach einem der Ansprüche 6 bis 8, dadurch **gekennzeichnet,** daß der einzelne Steg (11) außenseitig einen im Querschnitt rechteckigen Verschleißriegel (20) aufweist, welcher in die Lücke zwischen zwei Verschleißriegeln (20) des anderen Rotationskörpers (10) beim Kämmen vornehmlich berührungsfrei eintaucht.

10. Vorrichtung zum Pelletieren von pflanzlichem Gut, insbesondere Halmgut, zu schüttfähigen Preßlingen, bestehend aus einem gegenläufig rotierenden, zahnradartig ineinandergreifenden Hohlwalzenpaar (24,25), dessen Zähne an ihren axialen Stirnseiten mit Flanschkörpern verbunden sind, wobei zwischen den Zähnen radial sich erstreckende Kanäle für das gepreßte Gut vorgesehen sind, dadurch **gekennzeichnet,** daß die Zähne des Hohlwalzenpaares (24, 25) aus radial angeordneten, zwischen sich radial durchgehende Schächte (13) bildenden Stegen (11) mit in radialer Richtung gesehen wellenförmiger Profilierung bestehen, daß eine Anordnung zum Abbrechen der Preßlinge beim Verlassen der Schächte (13) vorgesehen ist und daß die Stege (11) stellenweise mit Vorsprüngen (33) versehen sind, die zur gegenseitigen Abstützung benachbarter Stege (11) in Umfangsrichtung bestimmt sind.

11. Vorrichtung nach Anspruch 10, dadurch **gekennzeichnet,** daß die Vorsprünge (33) als radial sich erstreckende Leisten ausgebildet sind, deren Stirnflächen (34) an den Stirnflächen (34) der Leisten (33) benachbarter Stege (11) abstützend anliegen.

## Claims

1. A pressing produced from compressed vegetable material by pelleting, the broad peripheral faces (2) being smooth, characterized in that the pressing (1) has a profiling (3) on its broad peripheral faces (2) in the manner of a corrugated sheet, and the lateral end faces (8) having the profile are constructed to be rough or fibrous, with fibres emerging from the end faces (8).

2. A pressing according to Claim 1, characterized in that the pressed vegetable material has, in the central wall region of the pressing (1), a structure (6) which is slightly wavy as seen in cross-section and whereof the difference in height from the trough of the wave to the peak of the wave is proportionately substantially smaller than that of the outer corrugated profiling (3).

3. A pressing according to Claim 1 or 2, characterized in that it has a varying density, as seen over the cross-section, such that the density in the region of the wave peaks (4) and wave troughs (5) is substantially greater than in the rest of the region.

4. A pressing according to one of Claims 1 to 3, characterized in that it has a width of approximately 10 cm, a height of approximately 1.5 cm and a wall thickness of approximately 0.5 cm.

5. A pelleting device for producing pressings, having two rotary bodies (10) which mesh with one another in the manner of gear wheels and have pressing channels through which a comminuted biomass is guided from the outside to the inside as the rotary bodies (10) mesh, resulting in compression, characterized in that the teeth of the rotary bodies (10) are formed by radially extending webs (11) with, as seen in the radial direction, a corrugated profiling (12) of their side faces, between which there extend correspondingly corrugatedly profiled shafts (13) as pressing channels, at the exit of which the compressed biomass is broken off.

6. A device according to Claim 5, characterized in that the individual web (11) has a wedge-shaped cross-section tapering from the outside to the inside and has in its opposing side faces the radially extending profilings (12), to form a corrugated structure of the pressing channels (13) located between the webs.

7. A device according to Claim 6, characterized in that the profilings (12) forming the wave troughs (16) are chamfered (14) at their radially outer end.

8. A device according to Claim 6 or 7, characterized in that the pressing channels (13) formed between adjacent webs (11) have, in the radial direction from the outside, first a pronouncedly wedge-shaped narrowing (17), then a section of constant inside width (18) and adjoining the latter a longer section having a slightly wedge-shaped widening (19).

9. A device according to one of Claims 6 to 8, characterized in that the individual web (11) has on the outside a wear bar (20) which is rectangular in cross-section and penetrates into the gap between two wear bars (20) of the other rotary body (10) on meshing, predominantly without contact.

10. A device for pelleting vegetable material, in particular stalk material, to give flowable pressings, comprising a pair of hollow rollers (24, 25) which rotate in opposite directions and engage in one another in the manner of gear wheels, and whereof the teeth are connected at their axial end faces to flange bodies, radially extending channels being provided between the teeth for the pressed material, characterized in that the teeth of the pair of hollow rollers (24, 25) comprise radially arranged webs (11) which form between them radially continuous shafts (13) and have, as seen in the radial direction, a corrugated profiling, in that an arrangement for breaking off the pressings as they leave the shafts (13) is provided, and in that the webs (11) are provided at certain points with projections (33) which are intended for mutually supporting adjacent webs (11) in the peripheral direction.

11. A device according to Claim 10, characterized in that the projections (33) are constructed as radially extending strips whereof the end faces (34) abut in supporting manner against the end faces (34) of the strips (33) of adjacent webs (11).

## Revendications

1. Corps pressé en matière végétale comprimée fabriqué par pelletisation, dont les surfaces périphériques larges (2) sont lisses, caractérisé par le fait que les surfaces périphériques larges (2) du corps pressé (1) comportent un profilage (3) de type tôle ondulée, et que les faces frontales latérales (8) comportant le profil sont rugueuses ou fibreuses avec des fibres sortant des faces frontales (8).

2. Corps pressé selon la revendication 1, caractérisé par le fait que, vue en section transversale, la matière végétale pressée a une structure légèrement ondulée (6) dans la zone médiane de la paroi du corps pressé (1), dont la différence de niveau entre le creux de l'ondulation et le sommet de l'ondulation est en proportion sensiblement plus faible que celle du profilage ondulé (3) extérieure.

3. Corps pressé selon la revendication 1 ou 2, caractérisé par le fait que, vue en section transversale, sa densité est variable de telle sorte que la densité dans la zone des sommets (4) d'ondulations et des creux (5) d'ondulation est nettement supérieure à celle de la zone restante

4. Corps pressé selon l'une des revendications 1 à 3, caractérisé par le fait qu'il a une largeur de l'ordre de 10 cm, une hauteur de l'ordre de 1,5 cm et une épaisseur de l'ordre 0,5 cm.

5. Dispositif de pelletisation destiné à la fabrication de corps pressés, comportant deux corps de rotation (10) munis de conduits de pressage, qui s'engrènent l'un dans l'autre comme des roues dentées, par lesquels une biomasse fragmentée est dirigée de l'extérieur vers l'intérieur en étant comprimée lors de l'engrènement des corps de rotation (10), caractérisé par le fait que les dents des corps de rotation (10) sont constituées de barrettes (11) s'étendant radialement dont les faces latérales, vues en direction radiale, comportent un profilage ondulé (12), entre lesquelles s'étendent des puits (13) à profilage ondulé correspondant servant de conduits de pressage à la sortie desquels la biomasse comprimée est fractionnée.

6. Dispositif selon la revendication 5, caractérisé par le fait que chaque barrette (11) a une section transversale en forme de coin qui se rétrécit de l'extérieur vers l'intérieur, et comporte dans ses faces latérales opposées les profilages (12) qui s'étendent radialement pour former une structure ondulée des conduits de pressage (13) situés entre les barrettes.

7. Dispositif selon la revendication 6, caractérisé par le fait que les profilages (12) formant les creux (16) d'ondulations sont biseautés (14) à leur extrémité extérieure radialement.

8. Dispositif selon la revendication 6 ou 7, caractérisé par le fait que les conduits de pressage (13) formés entre des barrettes (11) voisines comportent à partir de l'extérieur en direction radiale, dans un premier temps un rétrécissement (17) nettement en forme de coin, ensuite une section de largeur utile (18) constante, et ensuite une section adjacente plus longue ayant un élargissement (19) légèrement en forme de coin.

9. Dispositif selon l'une des revendications 6 à 8, caractérisé par le fait que chaque barrette (11) comporte sur la face extérieure une barre d'usure (20) de section transversale rectangulaire, qui pénètre dans l'interstice situé entre deux barres d'usure (20) de l'autre corps de rotation (10) lors de l'engrènement, de préférence sans contact.

10. Dispositif destiné à la pelletisation de matière végétale en pièces pressées pouvant être mises en vrac, notamment de matière de chaume, constitué d'un couple de cylindres creux (24, 25) tournant en sens opposés, qui s'engrènent l'un dans l'autre comme des roues dentées, dont les dents sont reliées à des éléments de bride au niveau de leurs faces frontales axiales, des conduits s'étendant radialement étant prévus entre les dents pour la matière pressée, caractérisé par le fait que les dents du couple de cylindres creux (24, 25) sont constituées de barrettes (11) disposées radialement qui, vues en direction radiale, comportent un profilage ondulé, et qui forment entre elles des puits (13) s'étendant radialement, qu'un dispositif est prévu pour fractionner les pièces pressées à la sortie des puits (13), et que les barrettes (11) sont munies par endroits de saillies (33) qui sont destinées à une mise en appui mutuelle de barrettes (11) voisines dans la direction circonférencielle.

11. Dispositif selon la revendication 10, caractérisé par le fait que les saillies (33) sont réalisées sous la forme de nervures qui s'étendent radialement, dont les faces frontales (34) prennent appui sur les faces frontales (34) des nervures (33) de barrettes (11) voisines.
